# EUROPEAN PATENT APPLICATION

(11) **EP 1 099 619 A2**
(43) Date of publication of application: **16.05.2001**
(21) Application number: 00203955.0
(22) Date of filing: 10.11.2000
(51) Int. Cl.: B62J 1/16

(54) **Baby carrier**

(30) Priority: 10.11.1999 NL 1013545
(71) Applicant: MMiD V.o.f., 2611 RK Delft (NL)
(72) Inventor: van Leeuwen, Nicole Gerardus Petronella, 2611 RK Delft (NL); Magermans, Marcel Peter, 2611 RK Delft (NL); Meertens, Marinus, 2611 RK Delft (NL)
(74) Representative: Brookhuis, Hendrik Jan Arnold

(57) **Abstract**

A baby carrier (110) which can be mounted on bicycle handlebars comprises a support structure (106) which can be mounted on the bicycle handlebars (102,103) and a baby-carrying element (111) which is supported by the support structure (106).

The support structure (106) is designed in such a manner that the baby-carrying element extends above the bicycle handlebars (102,103). The baby carrier (110) is designed in such a manner that the baby in the baby carrier (110) has his hips/thighs in the region in the vicinity of the imaginary axis of the steering post (102) of the bicycle handlebars (102,103).

Preferably, the baby-carrying element (111) is easy to remove from the support structure (106). The baby-carrying element (111) has one or more associated flexible carrying straps (148) for hanging the baby-carrying element (111) from the trunk of an adult for the purpose of transporting the baby in the baby-carrying element (111), preferably as a carry harness, the baby hanging in front of the upper body of the adult, preferably in an orientation in which the baby is vertical and is protected on the outer side by the receptacle.

## Description

The present invention relates to the field of transporting babies.

A first aspect of the present invention relates to transporting babies using a bicycle.

A known solution for transporting a slightly older baby, in practice of approximately nine months or older, on the bicycle is a bicycle child's seat which is attached to the bicycle handlebars and in which the baby sits in an upright position. One example of this is described in NL 9401178. Seats of this type are unsuitable for babies of younger than nine months, since they cannot or should not be transported in a sitting position.

To allow a younger baby nevertheless to be transported on the bicycle, use is sometimes made of a carry harness or carry bag, in which the baby is transported, the baby hanging in front of the trunk of the cyclist. For safety reasons, this solution is very inadvisable, but unfortunately is still frequently employed. In a carry harness or carry bag, the baby is virtually unprotected in the event of a fall or collision, and there is a considerable risk of the baby becoming trapped beneath the cyclist even in the event of an essentially harmless fall. Furthermore, it is not easy to cycle with a baby in front of the body.

EP 0 832 811 has described a bicycle seat for mounting on a bicycle, the angle of inclination of the baby-carrying element being adjustable with respect to the support structure, in such a manner that it should be possible to transport even a young baby. A variant in which the support structure is fixed to the frame of the bicycle on the front side of the bicycle is described with reference to Figures 6-8 of this publication. The baby-carrying element is in this case situated between the handlebars and the saddle (behind the handlebars) or in front of the handlebars.

One drawback to the solution described in EP 0 832 811 is that in the positions of the baby carrier shown in Figures 6 and 8 of this publication, the steering ability of the cyclist is seriously restricted. Furthermore, in the arrangement of the baby carrier shown in Figure 8 of this publication, the stability of the bicycle is adversely affected.

A first object of the first aspect of the invention is to provide a baby carrier which can be mounted on the bicycle handlebars and in an attractive way makes it possible to transport a baby safely using a bicycle.

A second object of the first aspect of the invention is to provide an improved baby carrier for use on the bicycle.

A third object of the first aspect of the invention is to provide a baby carrier which is suitable for transporting a young baby, in particular a baby of younger than nine months.

According to a first aspect of the invention, the first object is achieved with a baby carrier according to claim 1. As a result of the baby-carrying element being positioned above the handlebars of the bicycle and as a result of the fact that the baby-carrying element also pivots when the cyclist is steering, a plurality of advantages are achieved. Firstly, the drawbacks which have been described with reference to EP 0 832 811 in relation to the baby-carrying element being attached to the bicycle frame in front of or behind the handlebars are avoided. Furthermore, the centre of gravity of the baby carrier with the baby inside it is now at a relatively short distance from the axis of the steering rod, which is of benefit to the stability when cycling. Also, the baby is within reach of the cyclist and is relatively close to the cyclist's face. This is of advantage not only for the pleasure of the baby and cyclist, but also for the peace of mind of the baby, which in turn is of benefit to safety when cycling.

With regard to stability, it is advantageous if the baby has its centre of gravity, which is in the vicinity of its hips/thighs, situated close to the imaginary axis of the steering post of the bicycle handlebars.

Preferably, the baby carrier which can be mounted on the bicycle handlebars is designed to transport the baby in a substantially lying position. In this case, the baby-carrying element then also forms a head support which supports the head of the baby both at the back and at the sides.

Preferably, the baby lies with his longitudinal axis in the direction of travel of the bicycle.

The feet end of the baby-carrying element is preferably directed towards the cyclist, so that the baby can see the face of the cyclist.

To protect in particular the head of the baby, it is possible for a head-protecting structure to be provided in the vicinity of the head end of the baby-carrying element. By way of example, it is possible to provide a U-shaped head-protecting bracket which is pivotably attached to the baby-carrying element on each side.

Preferably, the baby-carrying element comprises a stable, dimensionally rigid receptacle which is open at the top, and a lining of soft (cushion) material which completely or partially covers the inside of the receptacle. The cushion material then defines an anatomically shaped recess inside the baby carrier, into which the baby fits, preferably a recess which is of sufficient depth for the head and trunk of the young baby not to project or scarcely to project above the baby carrier.

Preferably, the receptacle forms a stable protective body around the periphery of the baby, who is more or less in a lying position, so that in the event of a fall the baby does not come into contact with the ground and cannot become trapped.

The receptacle may, for example, be a plastic component which is produced, for example, by injection-moulding. The receptacle is preferably of streamlined form, corresponding to the contour of a baby lying on his back.

The receptacle is advantageously provided with one or more openings, preferably in such a manner that rainwater does not collect in the receptacle.

In an advantageous embodiment, the lining inside the receptacle rests against the wall of the receptacle. In this case, it is preferable for the back section of the lining, which extends at least behind the back and preferably also behind the head of the baby, to be provided with a soft pad which serves as a cushion between the baby and the receptacle.

In a preferred embodiment, the entire baby-carrying element can easily be removed from the support structure by hand, the support structure then remaining behind on the bicycle handlebars.

In a particularly preferred embodiment, the baby-carrying element, which is easy to remove from the bicycle, comprises a stable receptacle which is provided on the inside with a soft lining, and the receptacle is provided with carrying-strap coupling means, in order for one or more flexible carrying straps to be coupled to the receptacle, which carrying straps are designed to hang the receptacle from the body of an adult, preferably in a position in which the baby-carrying element hangs in front of the front of the trunk of the adult. In this case, it is preferable for the baby to be situated (largely) in the space between the receptacle and the body of the adult, so that the baby is protected on the outside by the receptacle. In a variant, the one or more carrying straps are not separate components, but rather are integral with the baby carrier. In a further variant, with a carrying strap which is integral with the baby-carrying element, it is possible to provide an (automatic) winding mechanism on the baby carrier, as is known, for example, for car seat belts.

The baby-carrying element is preferably provided with one or more belts for securing the baby with respect to the baby-carrying element. In a variant, it is possible for the one or more carrying straps for hanging the baby-carrying element from the trunk of an adult to be designed in such a manner that the baby can be secured to the baby-carrying element using the said strap or straps when the baby is being transported by bicycle. The above measures make it possible to ensure that the baby cannot fall out of the baby carrier, not even if the bicycle leans over or if the cyclist and bicycle fall over.

The first aspect of the invention also provides for the possibility of the lining of the baby carrier to be easy to remove from the stable receptacle, preferably even when the baby is lying in the baby carrier, in which case the lining is then used, in combination with one or more carrying straps, as a carry harness or carry bag for transporting the baby onwards hanging from the trunk of an adult.

The baby-carrying element may - if appropriate in combination with the flexible carrying straps described above - also be provided with one or more hand grips which are integral with the receptacle or with a (pivotable) stable carry handle which is attached to the receptacle, for the purpose of transporting the baby carrier by hand.

In one possible design, the baby-carrying element comprises a cover which extents at least over the (top part of the) face of the baby. The cover is preferably sufficiently strong to protect the baby, in particular his head, if the bicycle falls over. In one possible design, the cover is moveably, for example pivotably, attached to the baby-carrying element, in order in this way to make it easier to put in and remove the baby. The cover may also serve to protect the baby against the weather, such as rain and wind. To make it possible for the cyclist to see the baby, the said cover is preferably transparent at least in the area of the baby's head, for example being made from a strong, dimensionally stable, transparent plastic.

In a variant, the receptacle of the baby-carrying element is designed for the lining to be removably secured therein, in such a manner that the lining hangs inside the receptacle as a type of hammock. As a result, it is easy to protect the baby against vibrating and jolting movements of the bicycle.

The support structure is preferably of sprung and possibly shock-absorbing design, in order to protect the baby against excessive jolting and vibrations when cycling.

A second aspect of the present invention relates to the way babies are transported using a vehicle, in particular by bicycle but also, in another suitable variant, by car, and in particular the problem that when a baby is being transported by bicycle or by car there will usually be a time at which the adult then goes further on foot, for example in order to run errands, the baby then also having to be transported onwards.

A number of solutions are known to the situation described above.

DE 298 17 908 describes arranging a support structure onto which a baby carrier can be placed at the front of a bicycle. In this case, the baby carrier is a generally known baby carrier which is intended above all for transporting the baby by car and for carrying the baby carrier in the hand of an adult. For this purpose, a pivotable carry handle is arranged on the baby carrier. In combination with this known baby carrier, it is possible to use a buggy provided with wheels, which can be pushed by the walking adult and can likewise be transported on a bicycle, in a special holder.

A particular drawback of this known transportation system is that the support structure for the baby carrier is complex, takes up a large amount of room, so that the bicycle, for example, scarcely fits into a bicycle shed, and is very detrimental to the appearance of the bicycle. Also, carrying the baby carrier together with the baby by hand is relatively heavy. Also, transporting the buggy is not always easy and requires the bicycle to be adapted.

One solution for arranging a known baby carrier as described above on the luggage carrier of the bicycle is explained in DE 43 41 757. One drawback of this solution is that the cyclist cannot now see the baby.

The other known solution is for the baby to be transported in a carry harness or carry bag on the bicycle, as explained above. This solution entails unacceptable risks.

The bicycle seat described in EP 0 832 811 does not offer a solution to how the baby is to be transported when the bicycle has been parked and the adult is going on by foot.

Even if a baby is transported by car using a known baby carrier with carry handle, the above problem that when the baby is transported onwards on foot, a great weight has to be carried by hand still occurs. Therefore, an associated buggy has to be put in the car, onto which the baby carrier can then be placed. A drawback is that the buggy may be forgotten and that the buggy takes up a large amount of space in the car. A further drawback is that a buggy is not convenient everywhere, for example in a building with stairs or in woodland, on the beach, etc.

According to the second aspect, the object of the present invention is to provide a transportation system for a baby with which a baby can be transported safely using a vehicle, for example on the bicycle or in the car, and can be transported onwards by a walking adult in a suitable way after the bicycle or car has been parked.

The second aspect of the present invention to this end provides a baby transportation system in accordance with claim 8.

In other words, the second aspect of the invention provides for the baby-carrying element of the baby carrier, or at least part of this element, to have a dual use, namely for transporting the baby using the vehicle and for transporting the baby when walking. This means that the adult - after the bicycle or car has been parked - can then easily carry the baby with him in the carry harness.

It will be clear that the dual use of the baby-carrying element is extremely practical. In principle, the second aspect of the invention also saves expense compared to the need to purchase a baby carrier and a separate carry harness or carry bag. Also, when cycling there is not much to bring along, which is a particular advantage. A further advantage is that when the bicycle has been parked and the baby is being transported using the carry harness, only the support structure remains on the bicycle. This immediately prevents the lining of the baby-carrying element or the entire baby-carrying element from becoming wet, dirty or from going missing or being stolen.

In an advantageous embodiment, if the lining, with the baby lying on it, is easy to remove from the receptacle and is then used as part of the carry harness, this lining - which is usually to a large extent composed of one or more flexible materials, such as cloth and filling material - comprises a substantially dimensionally stable reinforcement member which is designed to support the buttocks and preferably also the lower back and the thighs of the baby.

The second aspect of the invention also relates to a baby carrier which can be mounted on a bicycle and in which a carry harness or a part of a carry harness can be attached as support for the baby, for example as a lining beneath the back and, if appropriate, along the head of the baby.

The second aspect of the invention also relates to a carry harness which is clearly intended, in addition to being hung from the trunk of an adult, also (entirely or partially) to be used as a baby-carrying element (or part thereof) of a baby carrier which can be mounted on a bicycle. A carry harness of this type may, for example, be characterized by the presence of attachment means allowing the carry harness or a part thereof to be attached to a baby carrier mounted on a bicycle.

A third aspect of the present invention relates to a baby carrier which can be mounted on bicycle handlebars, for transporting the baby on the bicycle, having a support structure which can be mounted on the handlebars and a baby-carrying element for the baby. According to this third aspect, the baby-carrying element is designed for transporting the baby in a lying position, the back-supporting surface being at an angle of at most 45°, preferably at most 30°, with respect to the horizontal. In this case, the baby carrier may be such that the baby is situated above the handlebars, but this third aspect of the invention also provides for it to be arranged in front of or behind the handlebars, as is known from the prior art.

A fourth aspect of the present invention relates to a baby carrier which can be mounted on bicycle handlebars, for transporting the baby on the bicycle, having a support structure which can be mounted on the handlebars and a baby-carrying element for the baby. According to this fourth aspect, the baby is transporting substantially in a lying position and a (transparent) cover is provided, which extends over the face of the baby.

A fifth aspect of the present invention relates to a carry harness for carrying a baby, having one or more carrying straps which are to be arranged around the body of the adult, a rigid reinforcement member being arranged in the bottom part of the carry harness for the purpose of supporting at least the buttocks of the baby. In this case, one of the carrying straps is a hip strap which is designed to be arranged around the adult at the level of the hips. Furthermore, the hip strap and the reinforcement member are provided with interacting attachment means for providing a removable, direct attachment of the reinforcement member to the hip strap. In this way, it is possible for the greatest part of the weight of the baby in the carry harness to be supported via the reinforcement member on the hip strap and therefore on the hips of the adult. This is considerably more comfortable for the adult than known carry harnesses, in which the weight of the baby is transferred almost completely to the shoulders of the adult.

Preferably, the carrying straps, including the hip strap, form a carrying-strap system which can be arranged on the trunk of the adult, in which case the baby-holding part of the carry harness, which is formed from one or more sections, can then be removably attached to the said carrying-strap system.

In a preferred embodiment, the carry harness has two sections, which together form a pouch into which a baby fits.

The pouch is preferably provided with openings for the head and limbs of the baby.

According to a sixth aspect, the present invention provides the combination of a carry harness for carrying a baby, on the one hand, which carry harness comprises a pouch into which a baby fits, as well as one or more carrying straps which are to be arranged around the body of the adult, and on the other hand a removable winter bag which fits removably over the pouch.

The winter bag is preferably composed of a plurality of layers which can be removed from one another. The winter bag is for example composed of a layer of thermally insulating material, for example fleece, and a watertight, preferably vapour-permeable layer, as is commercial available, for example, under the trade name Goretex.

A seventh aspect of the invention relates to an improvement to the carry harnesses which have been known hitherto for transporting a baby or child.

EP 0 087 063 has disclosed a carry harness in which the child is transported with his legs apart. In that known carry harness, a reinforcement member is present in the bottom part of the carry harness, which supports the buttocks and the upper legs of the baby. To hold the legs spread apart, which is considered to be desirable for medical reasons, in this known carry harness that section of the bag which is situated between the legs is tensioned separately so that it retains its width. For this purpose, there are additional eyelets through which a belt running around the body of an adult fits. This solution is complicated to use, reduces the wearing comfort for the adult and requires constant readjustment of the strip which holds the legs apart.

The invention proposes a plurality of solutions to solve this problem.

One solution provides for the carry harness to comprise one or more wrapping cloths. A wrapping cloth is preferably an elongate web of cloth which at one end is fixed, optionally removably, to the carry harness. Preferably, two webs of cloth are arranged in the vicinity of the underside of the carry harness, for example each web in the vicinity of an opening in the carry harness through which a leg of the child projects outwards. The wrapping cloth or cloths can then be used to drape the legs of the child sitting in the carry harness along either side of the body of the adult, for example by placing the cloths around the hips of the adult and knotting them together.

Incidentally, the wrapping cloth or cloths may also be arranged for another purpose, for example to wrap up the legs of the baby or child, for example in winter or bad weather.

Another solution for creating a position in which the child has his legs apart is - in a carry harness of the type which is provided, in the bottom part of the carry harness, with a rigid reinforcement member for supporting at least the buttocks and the thighs of the child or the baby - for a central elevation to be arranged in the reinforcement member, which elevation is situated between the upper legs, so that the legs cannot be brought together.

The various aspects of the present invention can obviously be used in all kinds of combinations, which likewise fall within the scope of the present application, even if they are not specifically mentioned.

The various aspects of the invention will be explained in more detail below with reference to the drawing, in which: Figs. la and lb diagrammatically depict side views of a first exemplary embodiment of a baby carrier according to the invention which is mounted on bicycle handlebars, while it is being positioned on the handlebars (Fig. la) and in the mounted position,
Fig.2 shows a perspective view of the baby-carrying element of the baby carrier shown in Figs. la, lb,
Fig. 3 shows the baby-carrying element from Figure 2, together with the associated carrying strap,
Fig. 4 shows a view corresponding to that shown in Figure 1 of the baby carrier with a rain hood,
Fig. 5 shows a diagrammatic, partially sectional side view of a second exemplary embodiment of a baby carrier according to the invention which is mounted on bicycle handlebars, with a baby also being shown,
Fig. 6 shows a perspective view of the baby carrier mounted on the handlebars from Figure 5, a part of a carry harness with a winter bag being positioned in the receptacle of the baby-carrying element,
Fig. 7 shows a view corresponding to Figure 6, without the winter bag,
Fig. 8 shows a cross section through part of Figure 5,
Fig. 9a shows an adult together with the carrying-strap assembly of the carry harness according to the invention,
Fig. 9b shows an adult with a pouch attached to the carrying-strap assembly and a baby who is being transported therein,
Fig. 9c diagrammatically depicts a perspective view of the reinforcement member of the carry harness shown in Figure 9b,
Fig. 10 shows an adult with a different carry harness according to the invention and a child who is being transported therein, and
Fig. 11 shows a variant of the reinforcement member shown in Fig. 9c.

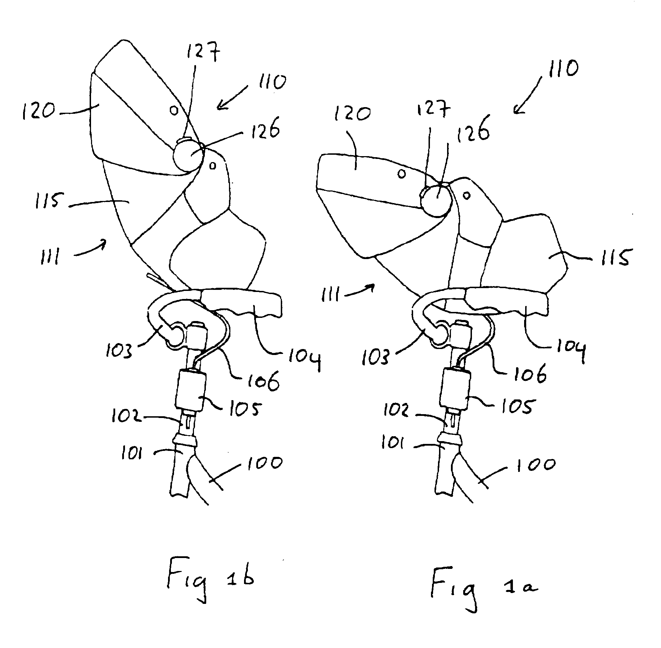

A first embodiment of the baby carrier according to the invention is now to be explained with reference to Figures 1-4.

Figures la, lb show the front part of a bicycle, with a frame 100 and steering head 101, in which steering post 102 is rotatably positioned. On the top of the steering post 102 there is a transverse bar 103 of the handlebars, with handles 104 on either side.

A baby carrier 110, which is to be explained in more detail, is mounted on the handlebars of the bicycle. This baby carrier 110 comprises a support structure which is mounted on the bicycle handlebars and a baby-carrying element 111 which is supported by the support structure.

The support structure is in this case formed by a mounting block 105, which is clamped securely on to the steering post 102, and a support bracket 106, which is attached to the mounting block 105. The support bracket 106 extends upwards from the mounting block 105 to above the transverse bar 103 of the handlebars and has a part which runs along the top of the said transverse bar and projects forwards.

The baby-carrying element 111, which is to be described in more detail, is easy to fix to the support bracket 106 and remove again by hand, for example by pushing the baby-carrying element on to the support bracket, as shown in Figure lb. Figure la shows the mounted position. Obviously, it is also possible for attachment means of different design to be provided between the baby-carrying element and the support structure, for example with a hand-actuable latch.

The support bracket 106 is designed in such a manner that the baby-carrying element 111 extends above the bicycle handlebars and not in front of or behind the bicycle handlebars, as is known from the prior art.

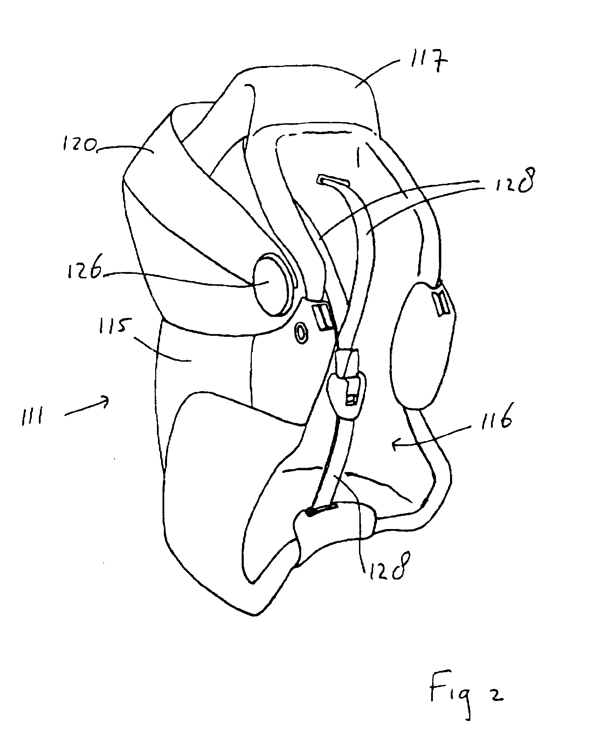

The baby-carrying element, which is clearly shown in Figure 2, comprises a stable, dimensionally rigid receptacle 115 which is open at the top and is completely covered on the inside by a lining 116 of soft material. The receptacle 115 is preferably made from plastic, if appropriate provided with metal reinforcement components.

The baby-carrying element forms a recess into which the baby fits, with a back-supporting surface and a peripheral wall which extends upwards from the back-supporting surface at the sides and at the buttocks or possibly feet of the baby. Figure 2 shows that at the head end of the receptacle 115 the peripheral wall is interrupted where a rear head support 117 is formed. In other words, the head of the baby, from the neck, extends outside the fixed peripheral wall of the receptacle, which is advantageous when the baby-carrying element is used as part of a carry harness, as will be described below.

A head-protecting structure 120 is provided at the head end of the receptacle 115 of the baby carrier. In this example, this structure is a pivotable, substantially U-shaped head-protecting bracket 120 which is attached to the sides of the receptacle 115 on either side via a hinge 126.

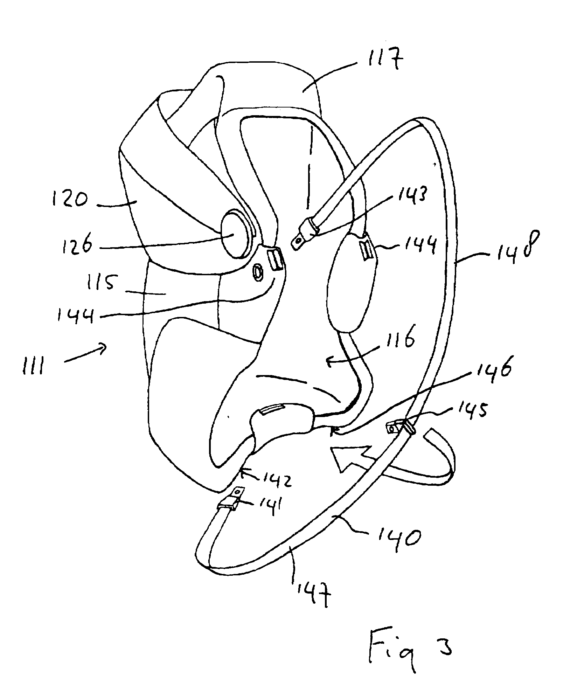

The head-protecting bracket 120 can pivot between a protective position (cf. Figures la, lb and 4), in which the head-protecting bracket 120 extends along the top of the head of the baby, and therefore more or less complements the peripheral wall of the receptacle 115, and a folded-away position (cf. Figures 2 and 3), in which the head of the baby is largely exposed. Preferably, the hinges 126 are provided with locking means which can be unlocked, for example, by actuation of an associated push-button 127 and lock the head-protecting bracket in one or more of its positions. The bracket 120 is also preferably made from plastic.

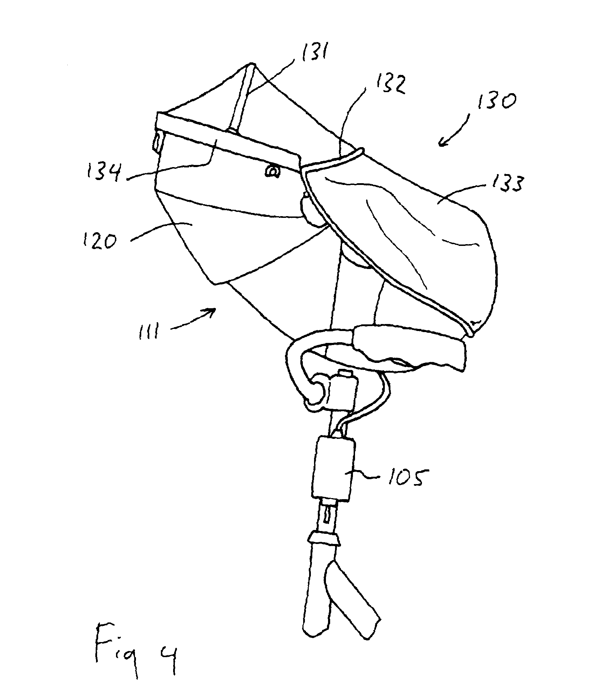

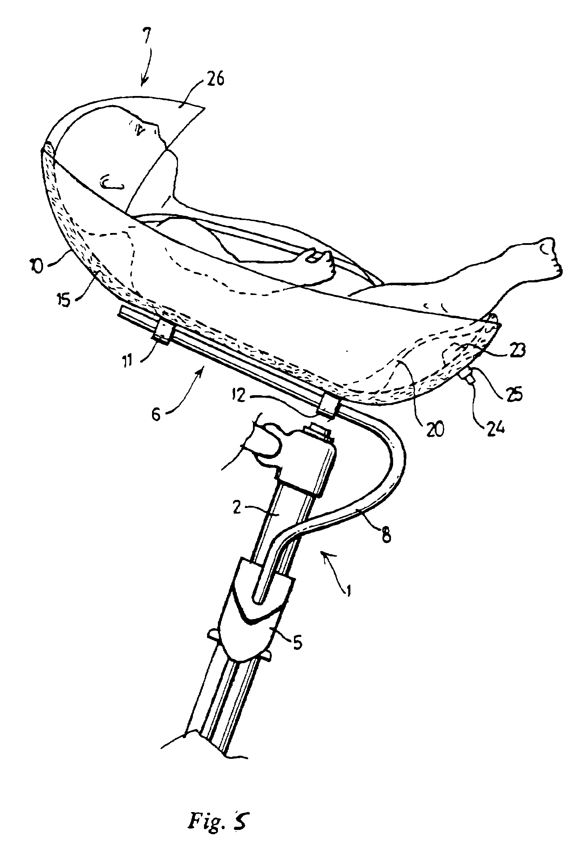

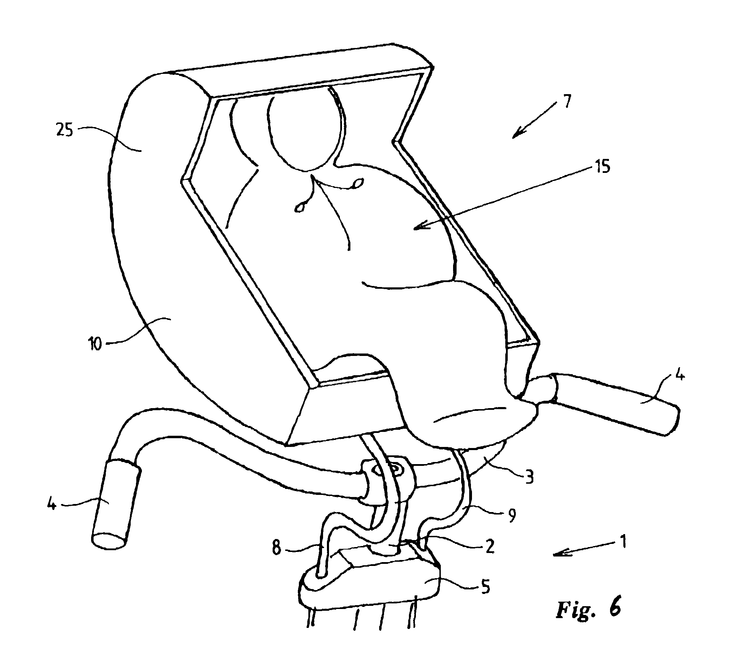

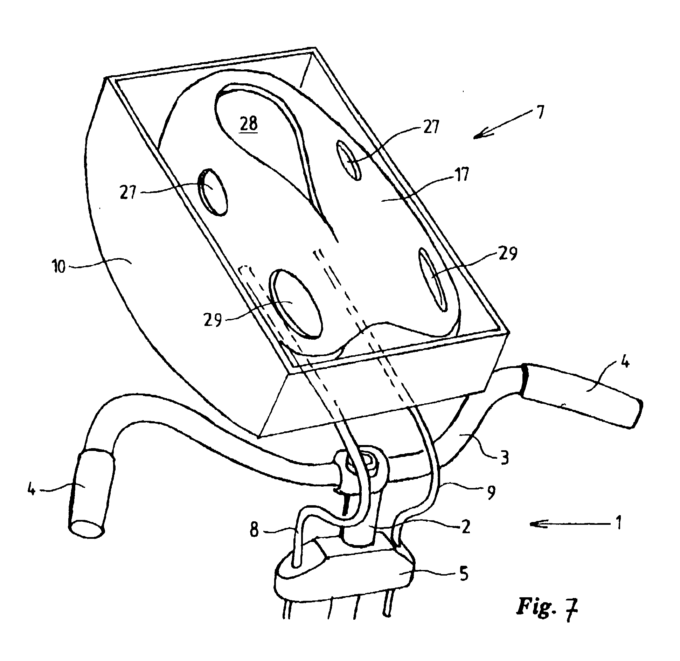

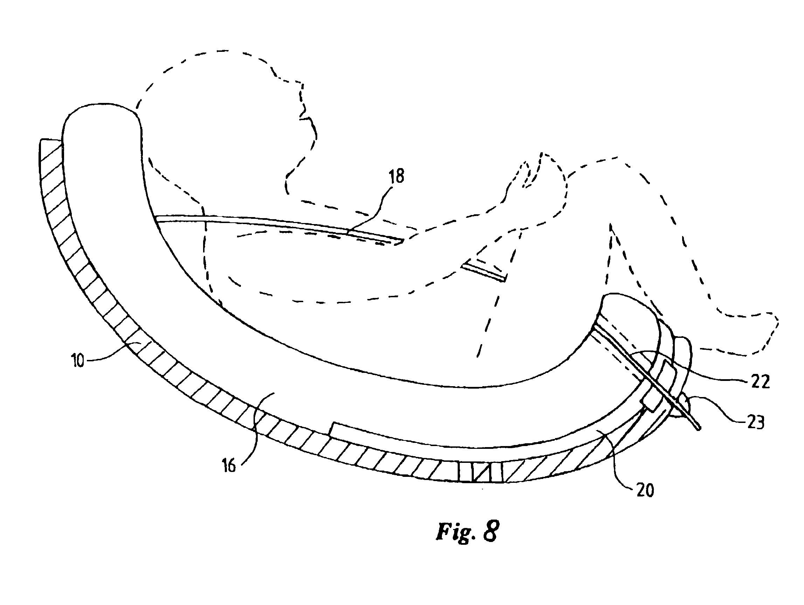

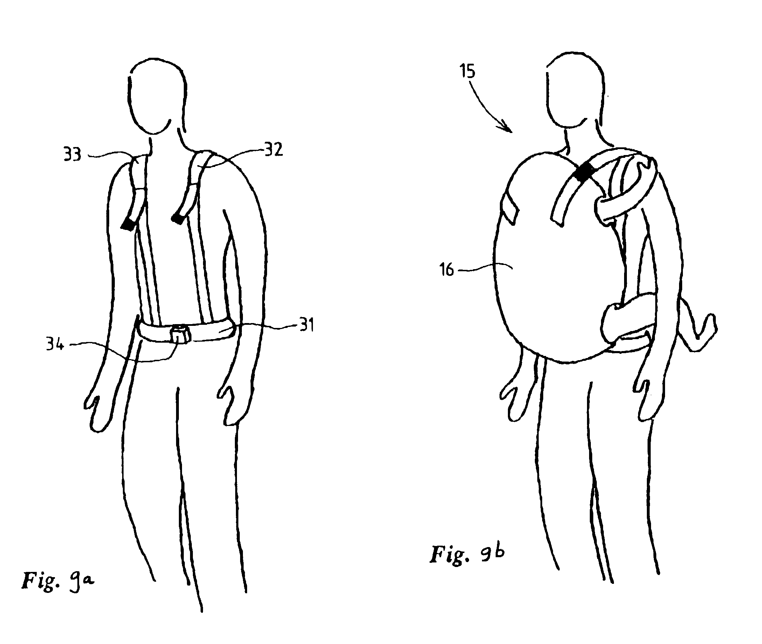

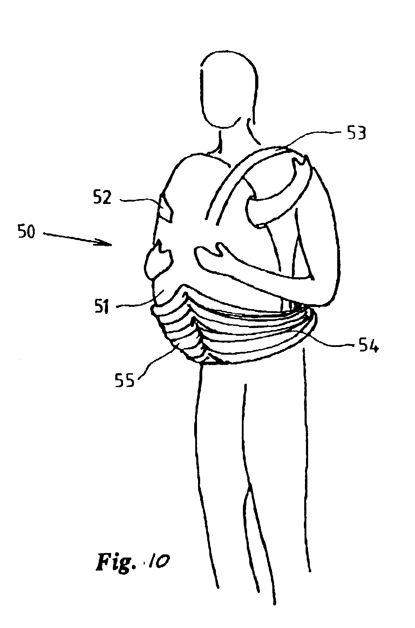

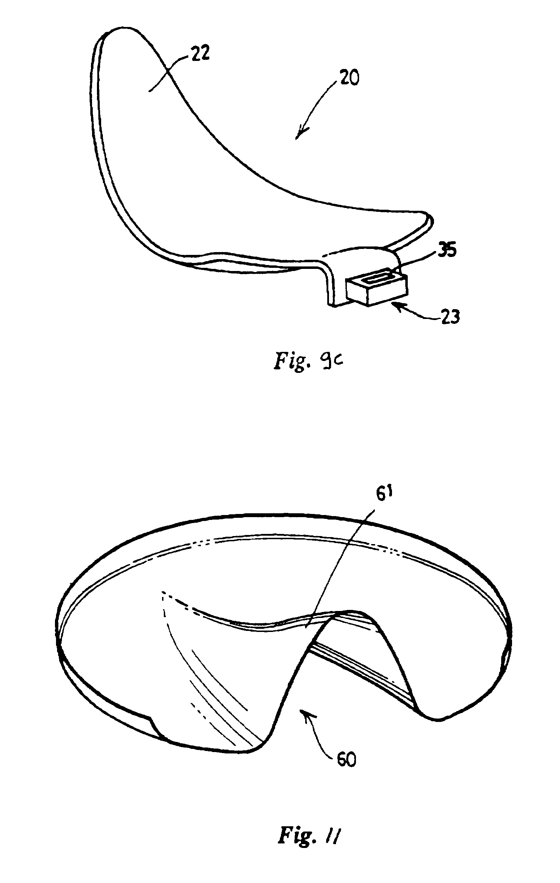

It can be seen clearly from Figure la and Figure 4 that when cycling it is intended for the bracket 120 to be locked in its head-protecting position. If appropriate, it is possible for the bracket 120 to be locked in such a manner that this bracket has to be in the head-protecting position if it is desired to mount the receptacle on the support bracket, and therefore remains locked in this position.

Figure 2 further shows belts 128, which can be used to fix the baby to the receptacle 115.

Figure 4 shows that the baby carrier is provided with a rain hood 130, which is designed to completely cover the top side of the baby carrier. The rain hood 130 can be folded up and, in the folded-up state, is situated at the head end of the baby carrier. In one possible design, the rain hood 130 comprises one or more support brackets 131, 132 for a rain shield 133, which brackets 131, 132 can pivot with respect to a base bracket 134. This base bracket 134 may then be removably attached to the head-protecting bracket 120, for example by means of a click-fit connection, as shown in Figure 4. The support brackets 131, 132 hold the rain shield at a distance from the head of the baby.

The baby carrier is designed in such a manner that the baby in the baby carrier has his hips/thighs in the region which is in the vicinity of the imaginary axis of the steering post 102 of the bicycle handlebars.

It can be seen clearly that the baby carrier is designed for transporting the baby on the bicycle in a substantially lying position. In this case, the baby-carrying element forms a back-supporting surface for supporting the back of the baby, which back-supporting surface is at an angle of at most 45°, preferably at most 30°, with respect to the horizontal.

The baby carrier is designed in such a manner that the feet of the baby are directed towards the cyclist, so that the baby can see the face of the cyclist.

It will be clear that the baby carrier described above can be used to transport a young baby safely by bicycle, which is not possible with the known seats. Positioning the baby-carrying element above the bicycle handlebars is advantageous for stability when cycling but also with regard to the distance between baby/baby carrier and cyclist. It prevents the cyclist from having to make undesirable movements in order to keep an eye on the baby or keep the baby quiet, for example to give the baby a pacifier.

Furthermore, it will be clear to the person skilled in the art that a number of aspects of the baby carrier described are also advantageous if the baby carrier is mounted not above the handlebars of the bicycle, but rather, for example, in front of or behind the handlebars or on the baggage carrier of the bicycle. These aspect include at any rate the design of the receptacle which has the pivotable head-protecting bracket. Incidentally, this receptacle may also be advantageous in baby carriers which are not intended for transporting babies by bicycle, but for example by car.

However, the invention also provides a solution for situations in which the bicycle has been parked and the adult wishes to transport the baby onwards on foot.

As has been stated, the baby-carrying element is easy to remove from the support structure without the baby having to be taken out of the baby-carrying element. The invention provides for the baby-carrying element which has been removed from the bicycle to be hung from the trunk of an adult with the aid of one or more flexible carrying straps.

Figure 3 once again shows the baby-carrying element which has been described above. This baby-carrying element has an associated single flexible carrying strap 140, which at one end can be coupled, via first coupling means 141, 142, to the receptacle 115 in the vicinity of the feet end of the baby-carrying element (in the region of the buttocks/hips), and at the other end can be coupled, via second coupling means 143, 144, to a coupling point on the baby-carrying element which is situated more towards the head end. In this example, the said coupling point is situated at the level of the baby's waist.

At a location between the two ends, the strap 140 can also be coupled, via third coupling means 145, 146, to a point on the baby-carrying element which is close to the feet end, in such a manner that the part 147 of the carrying strap 140 which is between the first coupling means and the third coupling means runs substantially horizontally along the rear side of the trunk of the adult, and the part 148 which is between the third coupling means and the second coupling means runs over a shoulder of the adult.

The third coupling means 145 arranged on the carrying strap 140 is slideable with respect to the strap 140, while the length of the strap 140 can also be adjusted to the adult.

The baby-carrying element, together with the carrying strap 140, then forms a carry harness, in which the baby hangs in front of the upper body of the adult, in an orientation in which the baby is vertical and is protected on the outside by the receptacle 115. It will therefore be clear that it is advantageous if the head-protecting bracket 120 can be folded away, so that the head of the baby is only supported from behind and the baby can breath without problems.

The coupling means are in this case designed with an insertion lock of the type used in a car seat belt,
automatically fixing an insertion element 141, 143, 145 arranged on a carrying strap in a corresponding lock 142, 144, 146 arranged on the receptacle 115.

Figure 3 clearly shows that a lock for the second coupling means arranged on the strap 140 is arranged on both sides of the receptacle 115. This allows the part 148 to be guided over either shoulder of the adult as desired.

In a variant which is not shown, it is also possible for the baby-carrying element to be provided with a rigid carry handle for the baby-carrying element with the baby in it to be carried by hand. This carry handle is preferably arranged pivotably on the receptacle 115. If appropriate, it is possible for the head-protecting bracket 120 which has already been described also to be used as a carry handle.

In Figures 5, 6 and 7, reference numeral 1 denotes handlebars of a bicycle; for the sake or clarity, in Figure 5 only the steering post 2 is visible, while the part 3 which has the handles 4 has been omitted. As is known, the steering post 2 is connected to the front wheel of the bicycle and is rotatably mounted with respect to the frame of the bicycle.

A mounting block 5 is attached, for example clamped, to the steering post 2, which an insertion opening for a support structure 6, which is yet to be described, of baby-carrying element 7 on either side of the steering post 2. The support structure 6 in this case comprises two bent metal rods 8, 9 which can be fitted into the insertion openings of the mounting block 5 and can preferably be secured with respect to the mounting block 5, for example using a lock.

The rods 8, 9 bear a stable, dimensionally rigid receptacle 10, which forms part of the baby-carrying element and is fixed to the rods 8, 9 by suitable means 11, 12. The receptacle 10 is open at the top side and has a base and upright side walls around the base.

The receptacle 10 is preferably streamlined and is preferably provided with openings, so that it is impossible for any rainwater to collect in the receptacle 10 when the bicycle is parked outdoors.

The receptacle 10 may, for example, be made from a rigid, impact-resistant plastic.

The dimensions of the receptacle 10 are such that a baby, in particular a baby of less than 9-12 months, can be transported in the receptacle 10 lying on his back. The angle of inclination of the base of the receptacle, on which the baby is lying on his back, is in this case preferably less than 30°.

The baby lies with his head in the direction of travel and with his face directly towards the cyclist, so that eye contact is possible.

The receptacle 10 is designed for a part of a carry harness 15, with the baby inside it, to be positioned in it, in such a manner that the carry harness 15, in particular the back section 16 thereof (cf. Figure 8), serves as cushioning between the baby and the receptacle 10. For this purpose the back section 16, which extends along the trunk and preferably also behind the head of the baby, is provided with soft padding.

The cross section shown in Figure 8 also reveals that the thighs of the baby are supported by the baby-carrying element 7 to slightly beyond the knee.

The receptacle 10 is provided with one or more belts 18 which serve to secure the baby with respect to the receptacle 10. Preferably, there are two belts 18, which run over the shoulders of the baby and meet at a common lock mechanism for securing the belts.

The carry harness 15 in this case comprises a pouch for holding a baby, which pouch is formed by the back section 16 and a front section 17, which can be seen in Figure 7. The pouch has openings 27 for the arms, openings 29 for the legs and an opening 28 for the head of the baby.

The carry harness 15 also has a carrying-strap assembly which is formed by straps which can be attached around the trunk of the adult. The carrying-strap assembly is shown in Figure 9 and comprises a stable hip strap 61 supported on the hips and two shoulder straps 32, 33.

In a manner which is to be described in more detail below, the pouch of the carry harness 15 can be attached to the carrying-strap assembly, so that the walking adult can carry the baby secured in front of his trunk. In this case, the adult has his hands free.

Therefore, according to the design described here, the baby, who is enclosed in the pouch of the carry harness 15, can be secured in the receptacle 10 and in this way transported by bicycle. On arrival, the baby can be taken out of the receptacle 10 together with the pouch and can easily be attached to the carrying-strap set, so that the baby can then be transported onwards on foot.

The pouch of the carry harness 15 and the receptacle 10 are provided with interacting attachment means, with which, in this example, the pouch is directly attached to the receptacle 10 in the region of the buttocks/hips of the baby.

A rigid, dimensionally stable reinforcement member 20 is arranged in this place in the pouch, an example of which member is shown in Figure 9c. The reinforcement member 20 is made, for example, of plastic.

The reinforcement member 20 has a seat surface 21 for supporting the buttocks and the thighs of the baby and a backrest part 22 for supporting the lower back of the baby. The reinforcement member 20 also has an attachment means 23, which is designed in such a manner that it is able to interact on the one hand with an attachment means 24, 25 associated with the receptacle 10 and on the other hand with an attachment means 34 arranged on the hip strap 31.

In this example, the attachment means 23 of the reinforcement member 20 is nothing more than a lip which is formed on the seat surface 21 and is provided with a slotted opening 25. The attachment means 34 is then, for example, a bent lip which fits through the slot 35, if appropriate with a click-fit connection.

In this example, the attachments means 24, 25 is formed by a member 24 which is arranged on the belts 18 and a lock mechanism 25 which is arranged on the receptacle 10. In this case, the member 24 is to be fitted through the slot 35 in the reinforcement member 21 in order to be secured in the lock mechanism 25. The latter is preferably designed in such a manner that the belts 18 can only be fixed to the receptacle 10 when, at the same time, the reinforcement member 20 is fixed to the receptacle 10 using the member 24 associated with the belts 18. This prevents the risk of the baby in the pouch being laid more or less "loosely" in the receptacle and being secured only by the belts 18. This is because in this "loose" position, the baby could twist himself into an undesirable position, and also, in the event of a fall, the baby could slip out from beneath the belts 18. This measure also provides a safety measure if the belts 18 have not been pulled taut enough.

The support structure in this case furthermore comprises a cover 25 which extends at least over the head of the baby. The cover 25 which is shown is made of transparent, robust plastic and may be designed to be removable or, for example, pivotable, in order to make it easier to put in and remove the baby.

Instead of the back section 16 of the carry harness 15 resting against the wall of the receptacle, it is possible for that part of the carry harness to hang inside the receptacle 10 as a hammock.

The mounting on the steering post 2 will lead to the baby moving with the movements of the handlebars. In this case, the baby has his hips/buttocks virtually above the axis of the steering post 2, so that the disruption to balance when cycling is minimal and the lateral movements of the baby are also minimal.

If the baby is being transported in the receptacle 10, the front section 10 offers a type of blanket which provides the baby with some protection against wind and other weather influences.

By way of example, storage means are provided on the receptacle 10, allowing the carrying straps 31-33 to be stowed.

Figure 10 shows an adult with a carry harness 50 for carrying a baby on the body of the adult, in particular in front of the adult's chest.

The carry harness 50 comprises a part 51 for supporting at least the buttocks and the trunk of the baby, as well as one or more carrying straps 52, 53 which are to be arranged around the body of the adult.

The carry harness 50 is furthermore provided with two wrapping cloths 54, 55, each wrapping cloth being an elongate web of cloth which is secured at one end. The two webs of cloth 54, 55 are arranged in the vicinity of the underside of the carry harness 50, in this example centrally on the underside of the carry harness. The wrapping cloths 54, 55 can, as shown, be used, for example, to drape the legs of the baby or the child along the body of the adult on either side, by placing the cloths around the hips of the adult and tying them together at the back. As a result, the baby can be transported with his legs spread open. The cloths 54, 55 could also be used to wrap up the legs, for example in winter. The cloths 54, 55 are preferably attached removably.

A further possibility for transporting the baby with his legs spread open is shown in Figure 11. This Figure 11 shows a reinforcement member 60 which is to be arranged in a carry harness for supporting at least the buttocks of the baby, with a central elevation 61 being present in the reinforcement member 60 for the purpose of ensuring that the legs of the baby are held spread open in the carry harness and also in the baby carrier 7, which elevation 61 is situated between the upper legs of the baby, so that the baby cannot bring his legs together.

## Claims

1. Baby carrier which can be mounted on bicycle handlebars and comprises a support structure, which can be mounted on the bicycle handlebars, and a baby-carrying element which is supported by the support structure, **characterized in that** the support structure is designed in such a manner that the baby-carrying element extends above the bicycle handlebars, preferably in such a manner that the baby in the baby carrier has his hips/thighs in the region in the vicinity of the imaginary axis of the steering post of the bicycle handlebars.

2. Baby carrier according to claim 1, which is designed for transporting the baby in a substantially lying position, in which baby carrier the baby-carrying element comprises a back-supporting surface for supporting the back of the baby, and the back-supporting surface is at an angle of at most 45°, preferably at most 30° with respect to the horizontal.

3. Baby carrier according to claim 1 or 2, in which a head-protecting structure is provided at the head end of the baby carrier, which structure extends along the top of the head of the baby, and is preferably arranged moveably, for example pivotably, on the baby-carrying element, in such a manner that the head-protecting structure can move between a protective position, in which the head-protecting structure extends along the top of the head of the baby, and an inactive position.

4. Baby carrier according to one or more of the preceding claims, in which the baby-carrying element comprises a stable receptacle which is open at the top and is completely or partially covered on the inside by a lining of soft material.

5. Baby carrier according to one or more of the preceding claims, in which the baby-carrying element is easy to remove from the associated support structure, and in which the baby-carrying element preferably has one or more associated flexible carrying straps for hanging the baby-carrying element from the trunk of an adult, for the purpose of transporting the baby in the baby-carrying element, preferably as a carry harness, the baby hanging in front of the upper body of the adult, preferably in an orientation in which the baby is vertical and is protected on the outer side by the receptacle.

6. Baby carrier according to one or more of the preceding claims, in which the baby-carrying element is easy to remove from the bicycle handlebars or the support structure, and in which the baby-carrying element has a single associated flexible carrying strap, which at one end is or can be coupled, via first coupling means, to the baby-carrying element in the vicinity of the feet end of the baby-carrying element, and at the other end is or can be coupled, via second coupling means, to a coupling point on the baby-carrying element which is located closer to the head end, and which, at a location situated between the two ends, can likewise be coupled, via third coupling means, to a point on the baby-carrying element which is situated in the vicinity of the feet end, in such a manner that that part of the carrying strap which lies between the first coupling means and the third coupling means runs substantially horizontally along the back of the trunk, and that part which lies between the third coupling means and the second coupling means runs over a shoulder of the adult, the baby-carrying element preferably being provided on both sides with a second coupling element, so that the carrying strap can, as desired, be placed over one or other shoulder of the adult, and the coupling means preferably comprising an insertion lock, for example of the type used in a car seat belt, which automatically fixes an insertion element arranged on the carrying strap to the baby-carrying element.

7. Baby carrier according to claim 4, in which the soft lining is easy to remove from the receptacle, and in which the soft lining has one or more associated flexible carrying straps for carrying the lining against the body of a walking adult, with the baby supported by the lining, in particular for the upper body, preferably as a carry harness in which the baby is vertically oriented.

8. Baby transportation system, comprising, in combination:
- a baby carrier which can be fixed to a vehicle, for example a bicycle or car, for transporting a baby, which baby carrier comprises a baby-carrying element having a stable receptacle which is open at the top and a lining which completely or partially lines the receptacle on the inside, and which baby carrier, if appropriate, also comprises a support structure which can be fixed to the vehicle and is designed to support the baby-carrying element, **characterized in that** the system also comprises one or more flexible carrying straps which, together with the receptacle or the lining of the receptacle - if the lining is easy to remove from the receptacle - are able to form a carry harness for the baby, which carry harness can be hung from the trunk of an adult, preferably in such a manner that the baby hangs substantially vertically in front of the trunk of the adult, so that the baby can be transported by a walking adult.

9. Baby carrier according to claim 8, in which the support structure is designed to be mounted on a bicycle, for example on the handlebar section of the bicycle, preferably on the steering rod.

10. Baby carrier which can be mounted on a bicycle, for transporting the baby on the bicycle, having a support structure which can be mounted on the bicycle, **characterized in that** the support structure is designed for a carry harness or a part of a carry harness to be secured releasably therein, as a support for the baby, which carry harness is designed to be hung from the trunk of the adult for the purpose of the baby being transported by the walking adult.
